# EUROPEAN PATENT SPECIFICATION

(11) **EP 0 544 389 B1**
(45) Date of publication and mention of the grant of the patent: **22.11.1995**
(21) Application number: 92305960.4
(22) Date of filing: 29.06.1992
(51) Int. Cl.: H04R 3/00

(54) **Wireless microphone device**
Drahtlose Mikrofon-Einrichtung
Dispositif d'un microphone radiotélégraphique

(30) Priority: 27.11.1991 JP 337568/91
(43) Date of publication of application: 02.06.1993
(73) Proprietor: PIONEER ELECTRONIC CORPORATION, Meguro-ku Tokyo 153 (JP)
(72) Inventor: Fujimoto, Hideki, c/o Pioneer Electronic Corp., Tokyo (JP); Yokoya, Masatoshi, c/o Pioneer Electronic Corp., Tokyo (JP); Sueyoshi, Susumu, c/o Pioneer Electronic Corp., Tokyo (JP); Hirai, Motoharu, c/o Pioneer Electronic Corp., Tokyo (JP); Sawada, Kazunori, c/o Pioneer Electronic Corp., Tokyo (JP); Morigaki, Toshio, c/o Pioneer Electronic Corp., Tokyo (JP); Matsushita, Hitoshi, c/o Pioneer Electronic Corp., Tokyo (JP)
(74) Representative: Flint, Adam

(56) References cited:
- US-A- 4 107 613
- US-A- 4 941 150
- US-A- 4 977 610

## Description

This invention relates to a wireless microphone device which is used, for instance, in singing with music accompaniment (KARAOKE) and which operates to transmit a modulation signal generated by modulating a carrier signal with an audio signal to an audio signal reproducing device in a wireless mode.

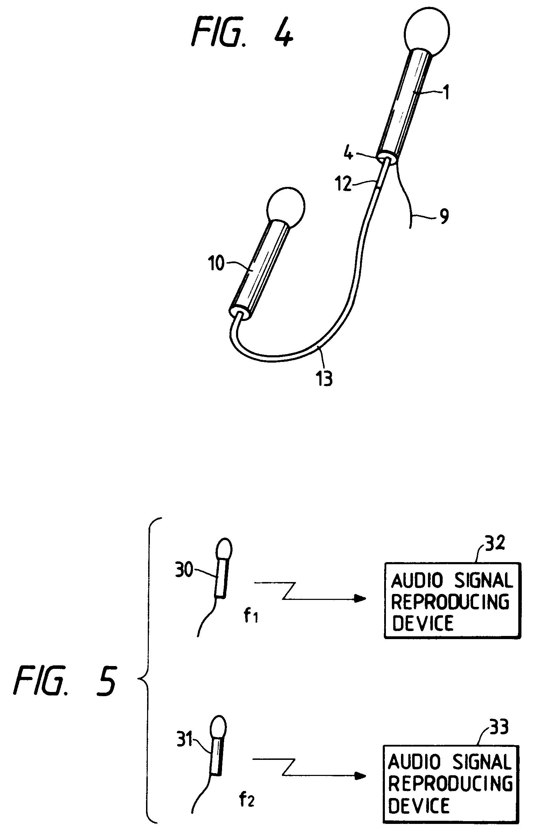

A conventional wireless microphone device is as shown in FIG. 5. In FIG. 5, reference numerals 30 and 31 designate wireless microphones which transmit modulation signals having carrier frequencies f1 and f2, respectively; and 32 and 33, audio signal reproducing devices which receive the modulation signals from the wireless microphones 30 and 31 and demodulate them into audio signals, and reproduce the latter.

In the conventional wireless microphone device thus organized, the wireless microphones 30 and 31 pick up audio signals such as voice signals with microphone elements built in them, and the audio signals thus picked up are used to modulate the carrier signals having frequencies f1 and f2, and the resultant modulation signals are transmitted as radio waves.

On the other hand, the audio signal reproducing devices 32 and 33 have demodulating circuits for demodulating the modulation signals of the carrier frequencies f1 and f2, respectively. That is, the audio signal reproducing devices 32 and 33 receive the modulation signals from the wireless microphones 30 and 31, and demodulate them, so that the audio signals picked up by the wireless microphones 30 and 31 are reproduced through loudspeakers built therein, respectively.

In the conventional wireless microphone device thus organized, in order to reproduce an audio signal transmitted from one wireless microphone, it is necessary to provide one audio signal reproducing device. Hence, in the case where a plurality of microphones are used concurrently as in the case of singing to music accompaniment in duet, it is essential that, as shown in FIG. 5, the carrier frequencies of the modulation signals transmitted through the wireless microphones are different from each other, and it is necessary to provide the audio signal reproducing devices (32 and 33) as many as the wireless microphones (30 and 31).

In this connection, there may be a method in which a plurality of wireless microphones are employed which transmit modulation signals having one and the same carrier frequency, and the modulation signals are received by a common audio signal reproducing device. However, the method is not practical because, if it is practiced, then the plurality of wireless microphones will produce beat signals, or the output signals of the wireless microphones will interfere with one another.

US-A-4977610, from which the preamble of present Claim 1 has been derived, discloses a wireless microphone system.

In view of the foregoing, an object of this invention is to provide a wireless microphone device with which a plurality of audio signals can be reproduced with one audio signal reproducing device.

According to the present invention, there is provided a wireless microphone device in which a carrier signal of a predetermined frequency is modulated with an audio signal to form a modulation signal which is transmitted in a wireless mode, the wireless microphone device comprising:
a microphone element for picking up a first audio signal; characterised by:
a microphone input terminal for connection with a signal output terminal of a secondary microphone for input of a second audio signal picked up by the secondary microphone, said secondary microphone being located externally of the microphone device;
adding means for adding the first audio signal and the second audio signal to provide an output signal; and,
modulating means for modulating the carrier signal with the output signal of the adding means to form the modulation signal.

The first audio signal picked up by the microphone, and the second audio signal picked up by the secondary (external) microphone, are applied to the adding unit, where they are subjected to addition, to provide the output signal which is applied to the modulating unit. In the modulating unit, the carrier signal having the predetermined frequency is modulated with the output signal of the adding unit, to form the modulation signal. The modulation signal thus formed is transmitted in a wireless mode.

In the drawings:-

FIG. 1 is an explanatory diagram, partly as a block diagram, showing the arrangement of one example of a wireless microphone device according to this invention.

FIG. 2 is an explanatory diagram, partly as a block diagram, showing an external microphone which is to be connected to the device shown in FIG. 1.

FIG. 3 is an explanatory diagram, partly as a block diagram, showing the arrangement of an audio signal reproducing device which receives the output signal of the device shown in FIG. 1, reproduces it.

FIG. 4 is a perspective view for a description of the use of the wireless microphone device according to the invention.

FIG. 5 is an explanatory diagram, partly as a block diagram, showing a conventional wireless microphone device.

One preferred embodiment of this invention will be described with reference to the accompanying drawings.

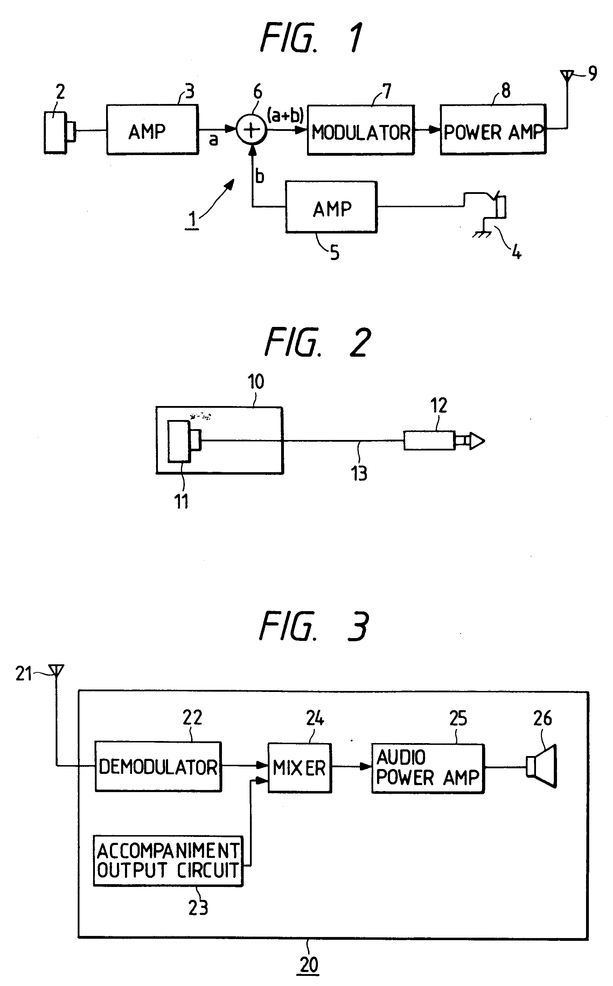

In FIG. 1, reference numeral 1 designates a wireless microphone device according to the invention, which includes the following components: That is, in FIG. 1, reference numeral 2 designates a microphone element for picking up an audio signal; 3, an amplifier for amplifying the audio signal;
4, an input unit, namely, an external input terminal to which another audio signal picked up by an external microphone is applied; 5, an amplifier for amplifying the audio signal applied through the external input terminal 4; 6, an adding unit, namely, an addition circuit for subjecting the amplified audio signal a from the microphone 2 and the amplified audio signal b provided through the external input terminal 4 to addition; 7, a modulating unit, namely, a modulating circuit for modulating a carrier signal having a predetermined frequency f1 with the output signal (a + b) of the adding unit 6, to provide a modulation signal; 8, a power amplifier for power-amplifying the modulation signal outputted by the modulating circuit 7; and 9, an antenna for transmitting the modulation signal thus power-amplified in a wireless mode.

In the device, the external input terminal 4 is an ordinary microphone jack, and the modulating circuit 7 may be an AM or FM modulating circuit.

FIG. 2 shows the arrangement of the external microphone 10 which applies the audio signal to the external input terminal 4. In FIG. 2, reference numeral 11 designates a microphone element built in the external microphone; 12, a signal output terminal made up of a microphone pin plug through which the audio signal output by the microphone element 11 is applied to the external input terminal; and 13, a lead wire connected between the microphone element 11 and the signal output terminal 12.

FIG. 3 shows one example of an audio signal reproducing device 20 which receives a modulation signal from the wireless microphone device 1 and demodulates it. In this case, the device 20 is used for singing to music accompaniment. In FIG. 3, reference numeral 21 designates an antenna for receiving the modulation signal; 22, a demodulating circuit for demodulating the modulation signal thus received; 23, an accompaniment output circuit for reproducing signals including only music accompaniments; 24, a mixing circuit for mixing the output signal of the demodulating circuit 22 and the output signal of the accompaniment output circuit 23; 25, an audio power amplifier for power-amplifying the output signal of the mixing circuit 24; and 26, a loudspeaker for reproducing the output signal of the audio power amplifier 25.

The accompaniment output circuit, by way of example, comprises: an optical disk recording medium player for reproducing audio signals and video signals from an optical disk recording medium for music accompaniment only; and a tape recorder for reproducing music accompaniment signals from magnetic tapes.

The operation of the wireless microphone device thus organized will be described.

First, as shown in FIG. 4, the signal output terminal 12 connected through the lead wire 13 to the external microphone 10 is engaged with the external input terminal 4 of the wireless microphone device 1. Therefore, the audio signals picked up by the microphone element 2 of the wireless microphone device 1 and the microphone element 11 of the external microphone 10 are amplified by the amplifiers 3 and 5, respectively. The audio signals thus amplified are applied to the addition circuit 6, where they are subjected to addition to provide an addition signal (a + b). The addition signal is applied to the modulating circuit 7. In the latter 7, the carrier signal of the frequency f1 is modulated with the addition signal (a + b), to provide a modulation signal. The modulation signal, after being amplified by the power amplifier 8, is transmitted through the antenna 9.

The modulation signal thus transmitted is received by the antenna 21 of the audio signal reproducing device 20, where it is demodulated into the aforementioned addition signal (a + b) by the demodulating circuit. The addition signal (a + b) thus obtained, and the music accompaniment signal outputted by the accompaniment output circuit 23 are applied to the mixing circuit 24, where they are mixed. The output of the mixing circuit 24, after being power-amplified by the audio power amplifier 25, is reproduced through the loudspeaker 26.

As is apparent from the above description, with the conventional wired microphone (shown in FIG. 2) connected to the wireless microphone device 1, two audio signals can be transmitted on one carrier signal.

In the above-described embodiment, only one external microphone 10 is employed; however, the invention is not limited thereto or thereby. That is, more than one external microphones may be used. In this case, the wireless microphone device 1 should be so modified that it has a plurality of external input terminals 4, and the signals provided through the terminals 4 are applied to the addition circuit 6.

While the invention has been described with reference to a singing-to-music-accompaniment system (KARAOKE), the technical concept of the invention can be applied to a loudspeaker system in which the output audio signal of a wireless microphone device is amplified and reproduced through a loudspeaker.

As was described above, according to the invention, a plurality of audio signals transmitted in wireless mode can be reproduced with one audio signal reproducing device.

## Claims

1. A wireless microphone device (1) in which a carrier signal of a predetermined frequency (f1) is modulated with an audio signal to form a modulation signal which is transmitted in a wireless mode, the wireless microphone device comprising:
a microphone element (2) for picking up a first audio signal; characterised by:
a microphone input terminal (4) for connection with a signal output terminal (12) of a secondary microphone (10) for input of a second audio signal (b) picked up by the secondary microphone (10), said secondary microphone (10) being located externally of the microphone device (1);
adding means (6) adding the first audio signal (a) and the second audio signal (b) to provide an output signal (a+b); and,
modulating means (7) for modulating the carrier signal with the output signal (a+b) of the adding means (6) to form the modulation signal.

2. A device according to claim 1, comprising a plurality of secondary microphone input terminals for respective connection with a corresponding plurality of secondary microphones.

## Patentansprüche

1. Drahtlose Mikrophoneinrichtung (1), bei der ein Trägersignal einer vorbestimmten Frequenz (f1) mit einem Audiosignal moduliert wird, um ein Modulationssignal zu bilden, das in einer drahtlosen Weise übertragen wird, wobei die drahtlose Mikrophoneinrichtung umfaßt:
ein Mikrophonelement (2), das ein erstes Audiosignal aufnimmt,
gekennzeichnet durch:
einen Mikrophon-Eingangsanschluß (4) zum Verbinden mit einem Signal-Ausgangsanschluß (12) eines Sekundärmikrophons (10) zur Eingabe eines von dem Sekundärmikrophon (10) aufgenommenen zweiten Audiosignals (b), wobei das Sekundärmikrophon (10) außerhalb der Mikrophoneinrichtung (1) gelegen ist;
eine Additionseinrichtung (6), die das erste Audiosignal (a) und das zweite Audiosignal (b) addiert, um ein Ausgangssignal (a + b) zu erzeugen, und
eine Modulationseinrichtung (7), die das Trägersignal mit dem Ausgangssignal (a + b) der Additionseinrichtung (6) moduliert, um das Modulationssignal zu bilden.

2. Einrichtung nach Anspruch 1, die eine Mehrzahl von Sekundärmikrophon-Eingangsanschlüssen zur jeweiligen Verbindung mit einer entsprechenden Mehrzahl von Sekundärmikrophonen umfaßt.

## Revendications

1. Dispositif de microphone sans fil (1) dans lequel un signal de porteuse d'une fréquence prédéterminée (f1) est modulé avec un signal audio pour former un signal de modulation qui est transmis dans un mode sans fil, le dispositif de microphone sans fil comprenant :
un élément de microphone (2) pour capter un premier signal audio ; caractérisé par :
une borne d'entrée de microphone (4) pour le raccordement à une borne de sortie de signal (12) d'un microphone secondaire (10) pour introduire un second signal audio (b) capté par le microphone secondaire (10) ; ledit microphone secondaire (10) étant situé de façon externe audit dispositif de microphone (1) ;
un dispositif d'addition (6) pour additionner le premier signal audio (a) et le second signal audio (b) pour fournir un signal de sortie (a+b) ; et
un dispositif de modulation (7) pour moduler le signal de porteuse avec le signal de sortie (a+b) du dispositif d'addition (6) pour former le signal de modulation.

2. Dispositif selon la revendication 1, comprenant une pluralité de bornes d'entrée de microphone secondaire pour le raccordement respectif à une pluralité de microphones secondaires correspondants.
